Europäisches Patentamt

European Patent Office

Office européen des brevets

(11) Publication number: **0 192 486**
**B1**

(12) **EUROPEAN PATENT SPECIFICATION**

(45) Date of publication of patent specification: **10.10.90**

(21) Application number: **86301225.8**

(22) Date of filing: **20.02.86**

(51) Int. Cl.⁵: **B 41 B 19/00**

(54) Photocomposition.

(30) Priority: **22.02.85 GB 8504565**
**12.12.85 GB 8530597**

(43) Date of publication of application:
**27.08.86 Bulletin 86/35**

(45) Publication of the grant of the patent:
**10.10.90 Bulletin 90/41**

(84) Designated Contracting States:
**CH DE FR GB IT LI NL SE**

(56) References cited:
**EP-A-0 112 518**
**EP-A-0 123 425**
**FR-A-2 374 720**

(73) Proprietor: **Moyroud, Louis Marius**
**Versitec Inc. 202 Grove Way**
**Delray Beach Florida 33444 (US)**
(73) Proprietor: **Moulin, Michel**
**Versitec S.A. 7 Rue de Lausanne**
**CH-1020 Renens (CH)**

(72) Inventor: **Moyroud, Louis Marius**
**Versitec Inc. 202 Grove Way**
**Delray Beach Florida 33444 (US)**
Inventor: **Moulin, Michel**
**Versitec S.A. 7 Rue de Lausanne**
**CH-1020 Renens (CH)**

(74) Representative: **Jack, Bruce James et al**
**FORRESTER & BOEHMERT Widenmayerstrasse**
**4/I**
**D-8000 Munchen 22 (DE)**

Courier Press, Leamington Spa, England.

## Description

This invention relates generally to photocomposition and especially to the composition of full pages containing text matter and graphics of high typographic quality. The invention is particularly concerned with photocomposition methods and machines that involve raster scanning of a photosensitive medium to build up images thereon.

In existing laser photocomposers, images are in general created by scanning the photosensitive medium with a single, modulated, narrow light beam. The photosensitive medium, typically a drum with a photosensitive surface, moves continuously, the beam moving perpendicularly to the direction of travel of the photosensitive medium so as to trace a single-line scan raster thereon. Because of the movement of the photosensitive medium the lines traced by the flying light spot diverge from the notional raster lines that would result from scanning a stationary surface. However, the divergence is small owing to the narrowness of the beam and the respective velocities of the flying spot and the photosensitive medium, so that compensation for this divergence is not required for acceptable image quality. On the other hand, productivity is limited by the need to produce a large number of single scan-lines one after the other, to fill the area occupied by a single text character.

There are proposals to scan a photosensitive medium simultaneously with a "brush" of individually modulated parallel narrow beams: see for instance US—A—4 746 942 and EP—A—0 123 425. In this case, the photosensitive medium is stationary during a scan and then moved by a distance equivalent to the width of the brush image, plus any required interline space, to avoid the problems caused by motion of the photosensitive medium during scanning. However, such intermittent movement of the photosensitive medium introduces delays and/or inaccuracies as a consequence of the inertia of the mechanisms for accomplishing the movement of the photosensitive medium. This limits the output speed and output image quality of a machine operating in this manner.

Complicated systems utilizing a large number of light emitting diodes have been proposed for example as described in EP—A—0 112 518.

The use of laser light for matrix dot printers has also been proposed as disclosed in FR—A—2 374 720. However printers of this class are not meant to be used in the Graphic Arts field and could not achieve the high level quality of photocomposers in view of their low resolution.

One objective of the invention is to increase the production speed attainable by laser photocomposing equipment and methods without deleteriously affecting the other operational parameters of the equipment and methods, and also, or instead, increasing the resolution.

Another objective of the invention is a method of produciong on the same photosensitive medium typographic characters of graphic arts quality as well as graphics by successively projecting onto the medium adjacent image slices, using simultaneously created individually modulated multiple scan lines with the high accuracy necessary to produce contiguous "brush strokes" of light dots.

Another objective of the invention is to provide a machine having this capability and in which the photosensitive medium is continuously moving in the direction perpendicular to the multiple scan lines "brush", with compensating means to ensure perfect registration of successive scans.

A still further objective of the invention is to provide a machine in which images to constitute, e.g., a page are built up on the photosensitive surface of a drum rotating about its axis by a linear array of individual light rays, the linear array being parallel with the drum axis and being moved in the direction thereof continuously to produce successive bonds of images on the photosensitive surface.

Thus another objective of the invention is to produce on the photosensitive surface of a continuously rotating drum a succession of characters spaced from each other by the rotation of the drum, the base lines of the characters being either perpendicular to or parallel to the axis of rotation of the drum.

Yet another objective of the invention is to provide means that could be implemented in existing laser printers in order to increase their speed and/or their optical resolution.

It is another object of the invention to provide, in a compact photocomposing machine (photocomposer), simple means to shift the output from one medium, for example a selenium drum, to another medium for example a film, in a flat projection area.

The invention thus consists in the methods and machines hereinafter defined in the appended claims.

In the methods of the present invention, full pages or portions of a page, prior to actual photocomposition, are stored in digital form by a "raster image processor" (R.I.P.) so that individual scan lines of the images (including characters) constituting, e.g., a whole page can be retrieved for subsequent use, several scan lines being substantially simultaneously retrieved from a buffer in order to produce simultaneous multiple scan lines mentioned above as a "brush".

The present invention is related to that of co-pending European Patent Application EP—A—0 182 675 (hereinafter called, shortly, "said copending Application") in a manner that will be explained.

Thus, as in the invention disclosed in the said co-pending Application, a light shutter unit comprising a columnar array of coterminous individually activatable elementary areas, conveniently constituted by a thin slice of PLZT material between crossed polarizers, is utilized in preferred embodiments of the present invention to spacially modulate a thin vertical line of light moving horizontally to gradually create images. But whereas in the disclosed embodiments of the invention of the co-pending Application the vertical, horizontally moving line was of variable length to produce one character at a time, in embodiments of the present invention utilizing such a light shutter, the vertical line is of a constant length during each scan. Said vertical line as it traverses the photosensitive medium may produce more than one line of characters or only a portion of a line of large characters and generally a relatively small portion of graphical material.

The invention is further explained and described with reference to the accompanying drawings, in which:

FIGURE 1 is a simplified partially schematic view of the preferred output unit of a photocomposing machine constructed in accordance with the invention;

FIGURE 2 illustrates the gradual formation of a portion of graphical material created by adjacent multiple raster lines;

FIGURE 3 represents the formation of images in a single scan line photographic printer of a known design;

FIGURE 4 is a schematic representation of two lines of characters projected on a stationary photosensitive medium;

FIGURE 5 represents three successive "wide brush" scans or sweeps produced on a continuously moving medium from a continuously rotating multi-faceted polygonal mirror, with no compensation;

FIGURE 6 shows the appearance on the medium of three "wide brush" scans projected from a forward-reverse continuously moving mechanism during each scan simultaneously with the displacement of the medium without compensation;

FIGURE 7 shows the appearance, on the medium, of contiguous adjacent "wide brush" scans with accurate compensation means for the simultaneously moving projection carriage and medium;

FIGURE 8 illustrates an alternative correction means;

FIGURE 8A illustrates an alternative correction means;

FIGURE 9 is a curve representing the displacements of the projection unit utilized to scan the width of the continuously moving medium;

FIGURE 10 schematically represents the path followed by light rays as they go through a PLZT wafer assembly;

FIGURE 11 represents an arrangement of the controlling electrodes of a light gates array;

FIGURE 12 is a schematic representation of an improved laser printer in which a relatively narrow brush of multiple scan lines is utilized;

FIGURE 13 illustrates the operation of an optical micrometer;

FIGURE 14 illustrates the use of a number of available scan lines to produce slices of images and compensate for the simultaneous motion of the photoreceptor and the image projector;

FIGURE 15 schematically represents an arrangement that may be utilized to compensate for continuous carriage and film motions and also to shift the ouptut from one photoreceptor to another;

FIGURE 16 is a block diagram illustrating the operation of the compensating system to obtain correctly positioned lines on a continuously moving photosensitive medium;

FIGURE 17 represents a portion of the grating utilized to detect the position of the carriage;

FIGURES 18—1, 18—2 and 18—3 represent two slightly different embodiments of the machine in which the photosensitive surface is located on a continuously rotating drum and the moving optical system traverses the length of the drum only once per page;

FIGURES 19—1, 19—2, 20—1 and 20—2 show how images or lines are formed in the embodiments of Figures 18—1 to 18—3;

FIGURE 21 schematically represents the location of imaging rays relative to the drum; and

FIGURES 22 and 23 are schematic views of an alternative arrangement for motion compensation in certain embodiments of the invention.

In the following description with reference to the drawings, the word "film" encompasses any photosensitive medium, such as silver halide paper or film, zinc oxide paper or plate, or selenium covered material in any form. By "scan line" we mean a very thin (of the order of 0.025 to 0.050 mm—0.001 to 0.002 inch) line traversing the film from one margin to the other or the beginning of a column of text or graphics from one end to the other. By "text line" we means one line of text, usually comprised of alphanumeric characters. By "multiple scan lines" we refer to a multiplicity of individual scan lines, independently modulated and emerging substantially simultaneously from a light shutter or light-gates modulating unit and traversing the film in one single sweep in the manner of a brush stroke. Depending on the number of individual scan lines, the sweep is also referred to as "narrow brush" or "wide brush". The word "beam" generally means a bundle of light rays.

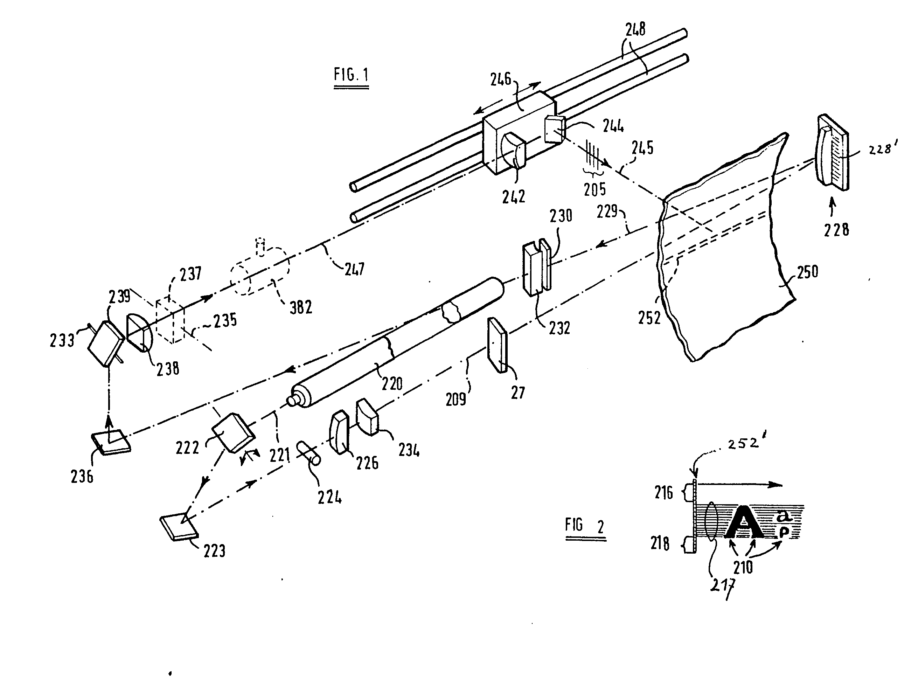

The major components of a photocomposer embodying the invention are shown in Figure 1, which differs from Figure 2 of the said co-pending Application in details not shown in the Figure except for the fact that mirror 239 can rotate around axis 233 and for the insertion of an optical micrometer shown in interrupted lines at 237, mounted on a pivoting shaft 235, and an afocal "zoom" lens system shown at 382. The other differences will be shown or explained in more detail in the following description. Thus, a light emitter is represented at 220 and is constituted by a He-Ne laser producing a narrow pencil of polarized light 221 which, after being folded by mirrors 222 and 223 goes through a single-plane expanding optics arrangement represented by cylindrical lenses 224, 226 and 234. In the present description, the plane perpendicular to the axes of these cylindrical lenses is called the vertical plane and the orthogonal plane, that is, the plane containing the axes of the cylindrical lenses referred to above, is called the horizontal plane. Lenses 224, 226 and 234 form, from the cylindrical laser beam 221, an elongated and narrow strip of light 209 which impinges on a light modulator or gates array assembly 228 from which, as will be explained later, it bounces back to go through a polarizer 230 and cylindrical lens 232. Beam 209, after modulation by the light gates array is represented by reference number 229. Lenses 232 and 238 constitute a telescope as shown in more detail in Figures 4 and 5 of the said co-pending Application.

Beam 231 emerging from lens 232 is folded by mirrors 236 and 239, the latter being pivotable about axis 233 and also the first component of the optical system for correction purposes, as will be explained later. The beam reflected by mirror 239 may be directed to an optical micrometer 237 also for correction purposes. The collimated beam 247, composed of parallel light rays, enters the de-collimating and focussing system comprised of lens 242 and mirror 244 mounted on a sliding carriage 246 supported by rails 248. The lens 242 and mirror 244 produce a converging beam 245 that has the shape of a narrow elongated bundle of rays when it impacts the film 250. The displacement of carriage 246 along its rails causes the narrow beam to traverse the film as shown at 252.

The gradual formation of images by a sequence of adjacent brush sweeps is schematically illustrated in Figure 2 in which the images of the light gates array is shown at 228 and the multiple scan lines of the brush at 217. Additional light gates 216 and 218 can be provided in the array for correction purposes, as will be explained later. A portion of a character image and some full characters created by the first brush sweep are shown at 210.

The width of each sweep may be set without regard to line spacing, character size or other variables. Each sweep, however, is of the same width and abuts the adjacent sweeps so as accurately to join character and other image parts to form whole images. Thus composition speed is increased compared with the prior art arrangements in which a maximum of one full line of characters is composed with each sweep; with the arrangement of the invention, parts of several lines of text can be composed in the same sweep.

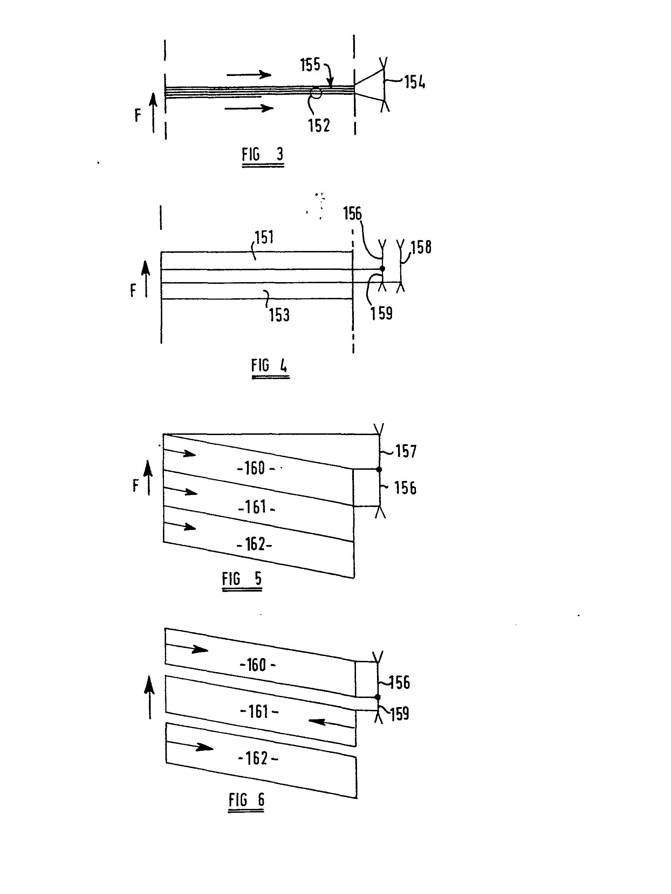

Although a wide brush sweep is preferred, it can be understood that the number of scan lines 217 of Figure 2 can be varied from two to 256 or more. It is evident that the speed at which images can be created depends on the number of scan lines per sweep (for a given resolution) and the displacement speed of the sweep across the film. In existing laser printers, in general, images are created by successive single-line scanrasters. In this case, the film (or more generally photoreceptor drum) moves in a continuous fashion. No compensation for the simultaneous displacement of the light line and the film is necessary because of the considerable difference between scanning and drum speeds and the very thin scan line. For example, in Figure 3, a scan line 0.025 mm (0.001 inch) thick is shown at 155. In order to have adjacent (or slightly overlapping) lines, the film moves 0.025 mm (0.001 inch) or less as the light spot traverses the film width. If the film were stationary, the trace left by the flying luminous spot would be as shown at 155; but because the film moves, the actual trace will be distant from the location line 155 at the end of a scan by a distance 154. As this amounts to a very small value, no compensation is necessary and the fact that the film or drum moves during each scan can be ignored.

When a wide "brush" of multiple scan lines is utilized, lines of text such as shown at 151 and 153 in Figure 4 can be produced on a stationary film that is moved up by a distance 158 representing the width of the sweep 156, plus the interline spacing 159. The usual procedure is to produce lines of text on the stationary film and move it up by the proper amount before the next sweep. This usual method introduces delays and/or inaccuracies because of the "start-stop" motion of the film and the inertia of the film feeding (or drum moving) mechanism.

In order to avoid the problems caused by a start-stop line spacing mechanism it is desirable to move the film either at a constant speed in synchronism with the projection scanning speed or to modulate the film speed. The appearance of wide brush successively projected areas is shown at 160, 161 and 162 in Figure 5. In this Figure, it is assumed that the wide brush moving means are in the from of a multi-faceted polygonal mirror. In this case, the brush always moves in the same direction, from left to right as shown in the Figure, where it is assumed that the polygonal mirror is so arranged that no time is lost between consecutive scans, or at least no more time than is necessary to produce exactly adjoining sweeps.

However, the speed at which the film moves is higher than the film speed of the prior art arrangement as represented by Figure 3. Therefore the film moves by the distance 157 between multiple line scans of the same width and the swept areas appear slanted. The distance 157 is much greater than the distance 154 in Figure 3 because of the higher film speed.

Figure 6 shows the appearance of swept blocks of data 160 to 162 when a carriage similar to carriage 246 of Figure 1 is utilized to perform composition while travelling in each direction. The gap 159 between consecutive blocks is caused by the turn-around time of the carriage at the end of each wide-brush scan. It is assumed, as shown by arrows, that blocks are projected in both directions of carriage movement. It is an important feature of the invention to provide for simple means to compensate for the continuous film motion so that successive sweeps of the multiple line scan (wide brush) are exactly contiguous with such accuracy that it is normally very difficult, if not impossible, to distinguish individual scans from one another.

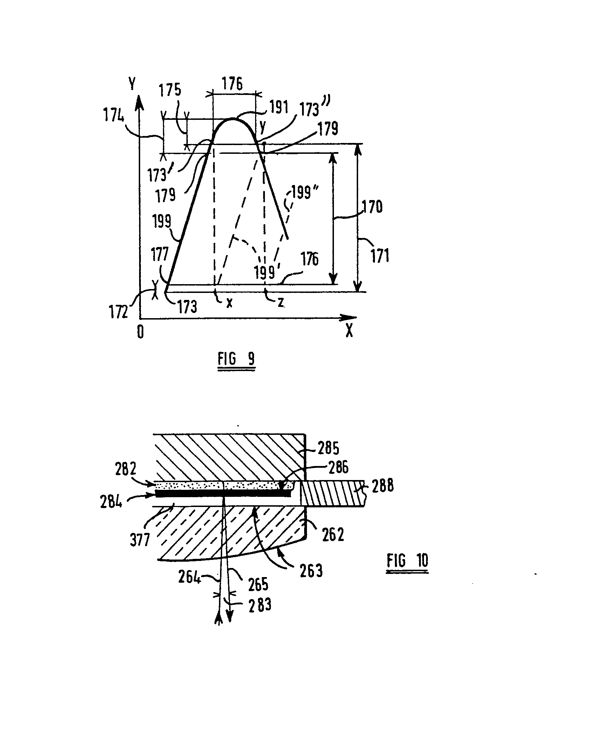

The graphic of Figure 9 illustrates the function and purpose of the correcting or compensating mechanism. In the Figure, the y coordinates represent the travelling carriage displacement in function of the time elapsed represented by the × coordinates. Starting at point zero, the carriage starts its translating motion, accelerates and reaches its full pre-established "cruising" and constant speed at 173, a short distance before the light rays it carries reach the margin of the image block at 177. The total distance covered by the carriage at constant speed is represented by 171 and its "active" travel corresponding to the length across the film of one image block at 170. A short distance after the carriage has moved the light beams beyond the opposite margin of the block, at point 173' of the curve, the carriage decelerates, stops and accelerates to reach its constant cruising speed in the opposite direction at point 173''. Its speed and direction are controlled by properly programmed electronic means. The total "turn-around" time is represented by distance 176 and the distance travelled during this time by 175. The purpose of the compensating means is to make the projected light brush image area "run" after the film as it is continuously moving. In order to compensate for the "turn-around" time, the film speed is determined so that the beginning of the projection of the following adjacent block does not occur before the carriage has reached its cruising speed and the compensationg mechanism has returned to zero, as explained hereunder. The compensating mechanism which may consist of a coarse and a fine system is continuously monitored by feed back information generated by the carriage position and the film feed encoding means.

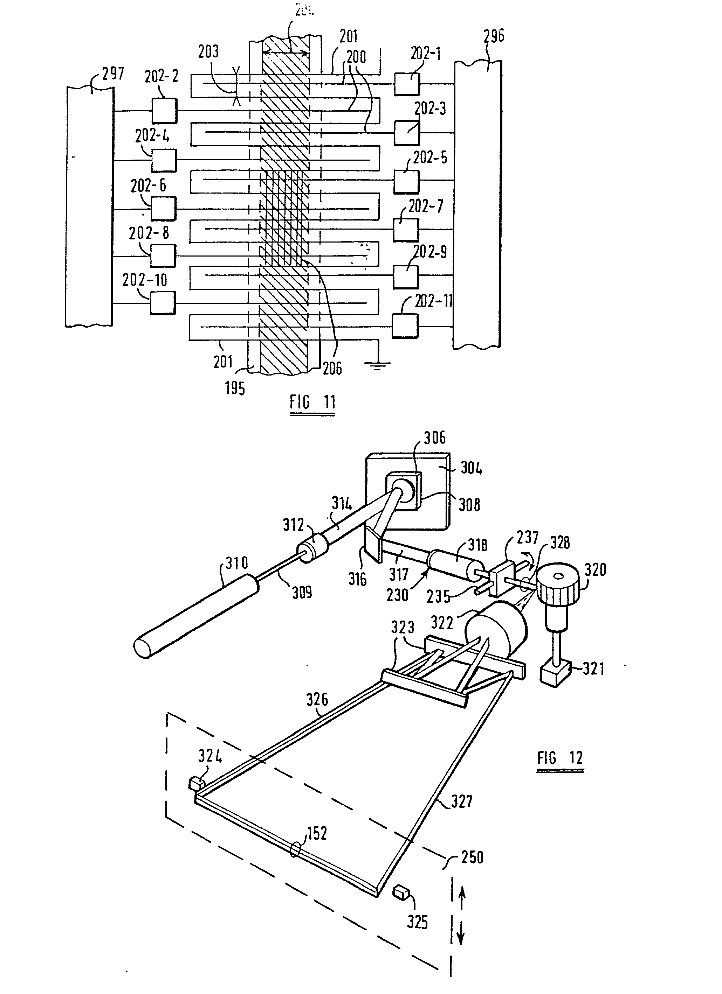

In the case where the sweeping mechanism is a rotating multi-faceted polygonal mirror e.g. as described below with reference to Figure 12, or a galvanometer-mirror mechanism, the sweeping motions correspond to parallel lines 199, 199' and 199'', each line corresponding to the passage of one reflecting facet of the polygon. The "dead time" separating one sweep from the next one is represented by 176', which corresponds to the turn-around time of the carriage mentioned before but is much shorter since very little time is lost between sweeps with a polygonal mirror as compared to the reversal operation of the carriage.

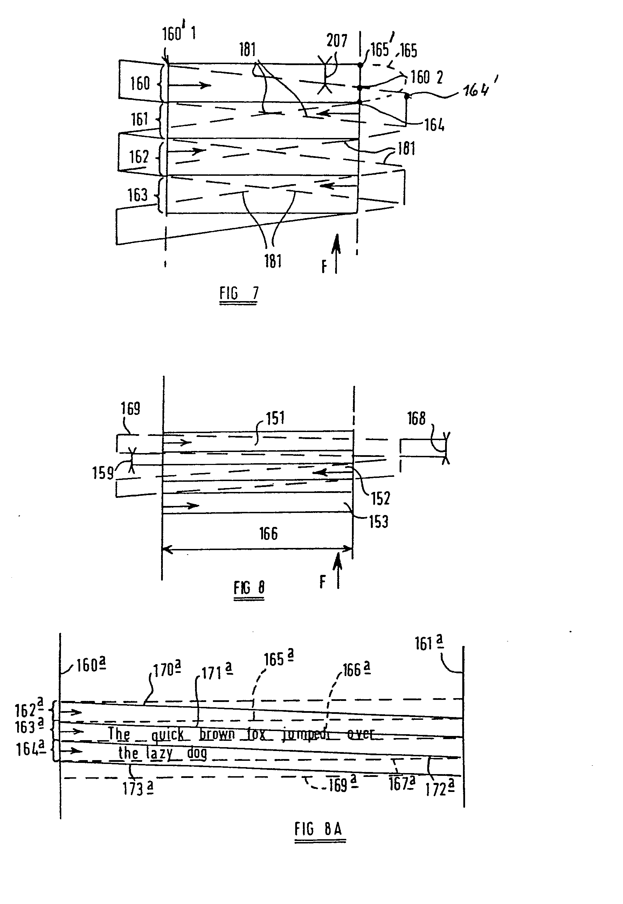

Figure 7 represents in solid lines a series of four contiguous blocks 160 to 163 as they would appear on the film if the carriage were projecting the light emerging from the highest and the lowest gates except for the ends of each block where it is supposed that all the gates are open in order to produce solid vertical lines. The thin phantom lines such as 181 represent the traces that would be left on the film in the absence of any compensating means. The direction of travel of the carriage is shown by an arrow in each block, and the direction of the film by arrow F. As mentioned above, the compensating means keep the light from the uppermost light gate in perfect synchronism with the film motion so that it is moving in a straight line perpendicular to the edge of the film from position 160'—1 (beginning of projection) to point 165 (end of projection). If no compensation were made, point 165 would be at 160—2. The curve followed by the light from the uppermost window if it were "on" is shown at 165'. The distance between point 160—2 and 165 represents the compensating value produced by the correction mechanism during the actual projection of the image block, and the distance between points 160—2 and 164 represents the distance travelled by the film during the turn-around time. Point 164' represents the extreme travel of the carriage and corresponds to point 191 of the curve of Figure 9.

The compensating system which is one object of the present invention can also be utilized in the case where the film moves continuously but the lines of text are not contiguous, as described in the said co-pending Application. Figure 8 represents three text lines 151, 152, 153. In this Figure, 166 represents the length of line (distance between margins); 159 the interline spacing; and 168, the height or point size of the characters. The correction mechanism operates as explained above, except that the carriage return is delayed by an amount of time that is a function of the interline spacing desired. It is evident that in this case each sweep must contain complete characters.

Three correction or compensating mechanisms will be described in relation with Figures 8A and 10 to 17. Figures 10 and 11 represent in a schematic form the light-gates array. Figure 10 is similar to Figure 9 of said co-pending Application. Light beams emerging from the front optical system represented by 264 enter lens 262 through the antireflection coating 263, go through space 377, through the open gates of PLZT wafer 284 supported by base 288 and are reflected back by mirror 285. The electroded surface of the PLZT wafer is shown at 286. This surface is isolated from the front surface of mirror 285 by a coating of appropriate gel shown at 282. The entering light rays are at a slight angle so that the returning rays take a different path shown at 265. In actual practice, angle 283 is very small. The plane defined by rays 264 and 265 is perpendicular to the plane of the Figure.

In Figure 11, the controlling electrodes such as 191 of the light gates are shown connected to individual drivers 202—1 to 202—11, and the common grounded electrode is shown at 201. When an electrode such as 200 is energized, the electrical field created between it and the common electrode opens a light gate shown at 203, by changing the polarization of the light passing through the gate area. The drawing shows the electrodes considerably enlarged. A gate such as 203, when projected onto the film through appropriate optics 318 and 322, may have a width of the order of 0.025 mm (0.001 inch). The electrodes are controlled by circuits represented by blocks 296 and 297 which may include shift registers and operate as more fully described in the said co-pending Application.

An aperture plate 195 may be positioned adjacent to the PLZT wafer in order to limit the length of

the gates to a selected value 204. The lightly shaded area of Figure 11 represents the window (or gate) aperture and the more heavily shaded portion 206 represents the light "transparent" area when drivers 202—5, 202—6, 202—7, and 202—8 are energized. In this case four adjacent scan lines can produce on the film a line 0.100 mm (0.004 inch) thick. Of course each of these four electrodes can be individually controlled to produce a very small spot of an image area.

The electrodes located above and below electrodes 202—5 to 202—8 can be utilied for the electronic "fine" compensation of the film motion, as will be explained in relation with Figure 12 which is a schematic representation of a commercially available "laser printer" that has been modified in accordance with the invention. In this particular case, in order to increase the performance of the printer with a minimum change in existing optics, the light brush may be limited to a small number of scan-lines; for example, as shown at 152 in Figure 3, where four scan-lines are shown by reference 152. However, even in this extreme case of compensation, as the scan line thickness may vary from 0.025 mm (0.001 inch) for very good resolution to 0.050 mm (0.002 inch) or 0.075 mm (0.003 inch), a correction system should be utilized. In general, the number of scan lines is variable between 16 and 64, depending on the R.I.P. capability.

In Figure 12, the laser is shown at 310, its output beam (preferably polarized) at 309 and an optical system preferably producing elongated beams 314 at 312. The PLZT spatial modulating unit 304 has the configuration that has been described in relation to Figure 10. A mirror 316 bends the modulated thin bundle of rays, shown at 317. These enter the polarizer 230 and the optical system 318 from which they emerge to go through an optional optical micrometer 237, from which emerging beams 328 reaches the multi-facted polygonal mirror 320 driven by a motor 321. After being deflected by the facets of the polygonal mirror, beam 328 enters focussing optics 322 from whence it is reflected by further correcting mirrors 323 before impinging on the film (or drum) 250. The optical system is such that the beam 328, as directed on to the film, is made up of closely spaced light rays contained in a plane substantially perpendicular to the plane of the film and parallel to its edges. As the mirror 320 rotates, the beam is swept from position 326 to position 327 so that each of the scan lines (not all shown in the drawing) traced on the film by the beam moves between two end-of-line detectors 324 and 325, also known in the art.

The film (or drum) 250 moves continuously in a direction perpendicular to the sweep of the beam, as indicated by the arrows in Figure 12. The compensation necessitated by this continuous motion of film (or drum) 250, which is much faster than in prior art polygonal mirror devices to give much higher composing speeds, can be taken care of in two ways. The preferred arrangement is shown in Figure 14, where the scan lines produced by the unit 304 and utilized at the beginning of a sweep are shown at 298: the unit 304 can, however, produce additonal or "in reserve' scan lines shown at 299 and 300 that can be selected, sequentially to replace the original lines 298, by a shift register 301 controlled by a compensating circuit which maintains the position of the scan lines bundle in synchronism with the position of the film. For example, assuming that scan lines 298 generated by the central gates of unit 304 are utilized at the beginning of a sweep, the highest gate of group 299 can be substituted for the lowest gate of group 298 when the sweep has progressed for a predetermined fraction of its total length, whereafter the next highest gate of group 299 is substituted for the new lower gate after another fraction of the total sweep length, and so on. In this manner, incremental corrections of the order of 0.025 mm (0.001 inch) are periodically introduced to compensate for the simultaneous motion of the multiple scan-lines narrow brush image and of the film.

When any text is composed in a device producing contiguous wide brush strokes where compensation is not needed (e.g., in a device in which film feed is intermittent, instead of continuous so that the film is stationary during each sweep) gate operating instructions are stored in the random-access memory ("RAM") of the computer used to control the photocomposing machine as a plurality of n-bit words, where "n" is the number of active gates in the gates array. Each word thus consists of up to 256 separate instructions for the gates, if there are 256 gates in the array. For each full sweep, there are $x$ separate words, where "x" is the total number of vertical lines of dots in the sweep. For example, if a resolution of 512 lines per cm (1280 lines per inch) is selected, for a sweep 25 cm (ten inches) long, 12,800 256-bit instructions will be stored in RAM. Then, as the carriage moves across the film, each of the words is read out of memory in sequence and instructs the light gates to open in the desired sequence to form the characters or portions of characters or other graphic matter to be formed during that sweep.

Figure 8A illustrates, as an example, two lines of text composed by the structure of Figure 12, with a pattern similar to that shown in Figure 5, or in one of the continuously-rotating drum embodiments to be described below. In both structures, each sweep always starts at the left margin, 160a, with spacing such that the sweep accurately joins with the preceding sweep.

Referring to Figure 8A, in the first sweep defined by the left and right margins 160a and 161a, and dashed lines 165a and 166a, the computer previously will have stored instructions such that all of the characters in the first line of the example, "The quick brown fox jumped", will be formed, except for the descenders or lower portions of the letter "q" and "j". The instructions stored for the next sweep defined by dashed lines 166a and 167a, are such that all of the characters "over the lazy dog" will be formed during that sweep, except for the descender or lower portion of the letters "y" and "g", and the descenders of the first line. Then, for the third sweep, defined by dashed lines 167a and 169a, the only instructions stored are those for the descenders of the letters "y" and "g", these being the only character portions formed during the third sweep.

When the gate-shifting means and method is used to compensate for skewing due to simultaneous continuous motion of both the film and the projection carriage, then the width of the sweep is reduced by the number of light gates corresponding to the movement of the film during each sweep. For example, if the film moves by a distance corresponding to 128 of the 256 light gates, the sweep can be only 128 gates in width because the remaining 128 gates of the total number must be used in the shifting process to provide motion compensation. The shift register 301 described above and shown in Figure 14 shifts the active array of gates downwardly by one gate for every m vertical lines, where "m" is equal to "x", the total number of vertical lines in one sweep, divided by the number of gates the film moves during the sweep. For the example given above, where x = 12,800, m = x/128, and m = 100. Thus, the active gates in the array will shift down by one gate for every 100 vertical lines.

An alternative correction method is performed entirely by means of software.

The same result as in the gate-shifting method can be achieved in software without diminishing the number of active gates by simply shifting the addresses in memory from which the gate operating instructions are retrieved during each sweep. In the example given above, the addresses from which instructions are retrieved are shifted by one for every 100 vertical lines in the sweep. By this means, the character portions between the solid lines 170a and 171a will be formed during the first sweep 162a; the character portions between lines 171a and 172a are formed during a second sweep 163a; and the character portions between lines 172a and 173a are formed during a third sweep 164a.

It should be noted that the first sweep 162a started one sweep-width before the first sweep starts when the sweep occurs with the film stationary. Nevertheless, this method requires only three sweeps, each having all of the gates available for use, and thus provides motion compensation while allowing each sweep to be of maximum width. This helps to maximize the speed of composition.

Another way to achieve the same result is to encode and store the gate operating instructions in memory in the same pattern as the character portions have between the slanted lines such as lines 170a, 171a. With this change, the shifting of addresses in memory is not necessary. For example, instructions for forming the tips of the letters "b" and "f", and upper portions of "fox" and "jumped" are stored for the first sweep 162a; the remainders of the characters for the second sweep 163a and so forth.

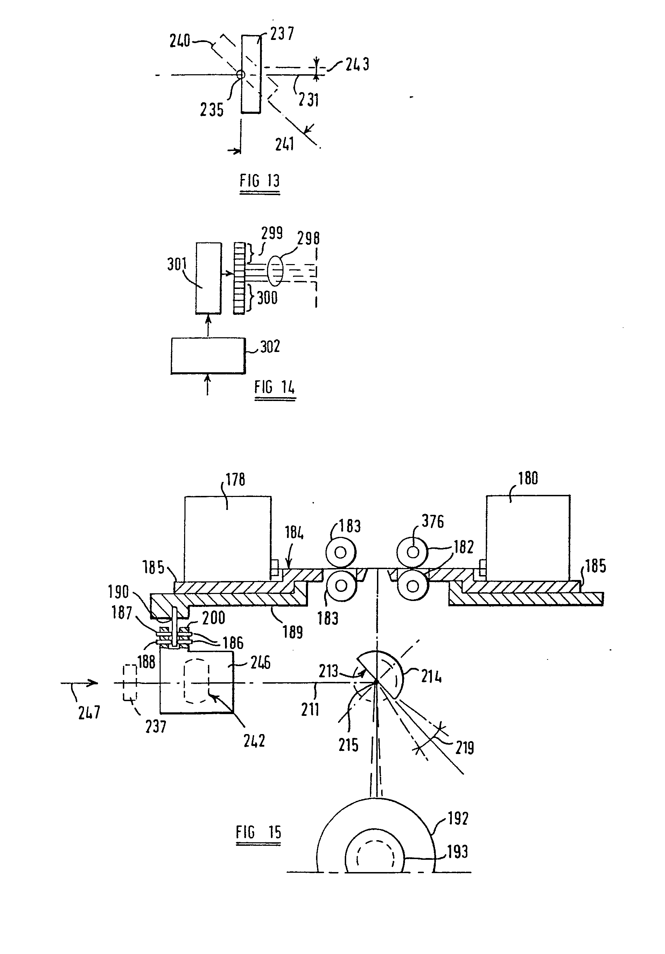

Compensation for film motion can also be accomplished by the correction means shown in Figure 13, which illustrates a well known optical micrometer comprising a glass plate 237 that can be tilted around pivot point 235. A relatively large rotation of the micrometer glass plate results in a rather small displacement of the light beam 231 when it emerges from the micrometer: the displacement depends on the thickness of the glass plate 237, the angle 241, and the refractive index of the glass. In the arrangement depicted relatively large rotation of the optical micrometer from position 237 to position 240 results in a small parallel displacement of the emerging beam represented by 243 for a rather thin micrometer glass plate. The optical micrometer can if desired be used as a "coarse" correction means, in conjunction with the gate-shifting or its equivalent as described above, for "fine" correction.

Of course, the need for compensation for film motion can be avoided if the film is made to move step by step, after each sweep by the scan lines bundle, but this brings other problems due to inertia of the components moved in this manner. Nevertheless it will be clear that, whether the film is moved continuously with compensation as described, or step by step, through this new approach the speed of existing printers can be considerably increased as well as their resolution.

Figure 15 illustrates another "coarse" correction means, applied to an arrangement such as described with reference to Figure 1. The light beam 211 emerging from carriage 246 is reflected by mirror surface 213 of a rigid mirror structure shown as having a half-moon cross section. The mirror surface can rotate around axis 215 in order to maintain the projected image on a straight line perpendicular to the margin of the photosensitive medium, here represented as a drum 192 that rotates simultaneously with the motion of the carriage 246. The maximum angular rotation of the mirror surface 213 during imaging of the widest block generated by a large light brush is represented by angle 219. An encoder of high accuracy is attached to the mirror and is shown by interrupted lines 214. This encoder is utilized to transfer to the control circuit in a continuous fashion the location of the mirror and consequently the location of the reflected beam of light.

The mirror assembly can also be indexed through ninety degrees in order to transfer the light rays 211 from the drum 192 to another photosensitive medium, for example a film 184 continuously driven by rollers 182 from a supply cassette 178 through idler rollers 183 to an output cassette 180, both cassettes being mounted on a common plate 185 removably attached to the general frame of the machine 189. In order to obtain the maximum feedback accuracy, two or more of the film feed rollers such as 182 can have an integral encoder schematically shown at 376 in order to give accurate information as to the movement and location of the film 184 at all times to the compensating circuit.

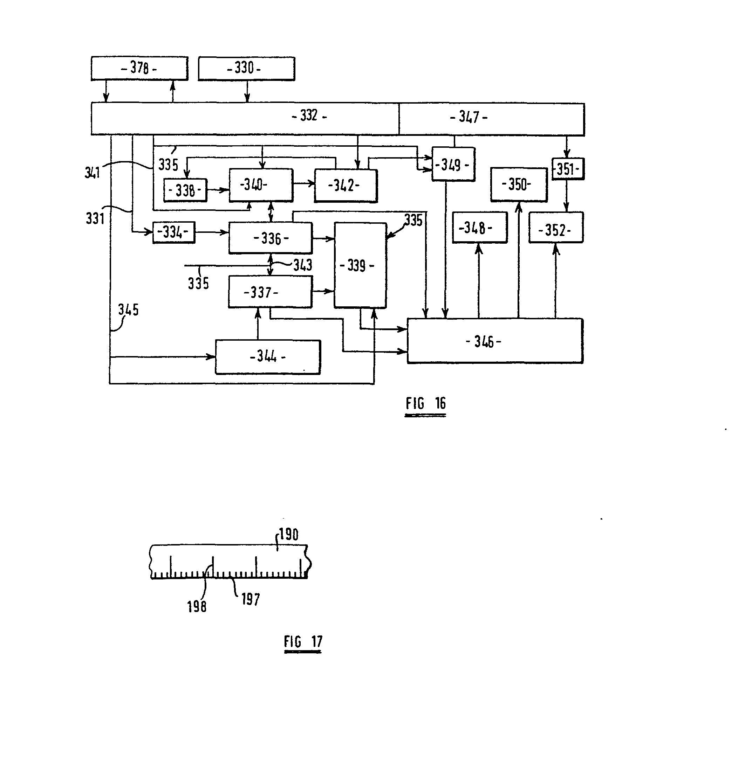

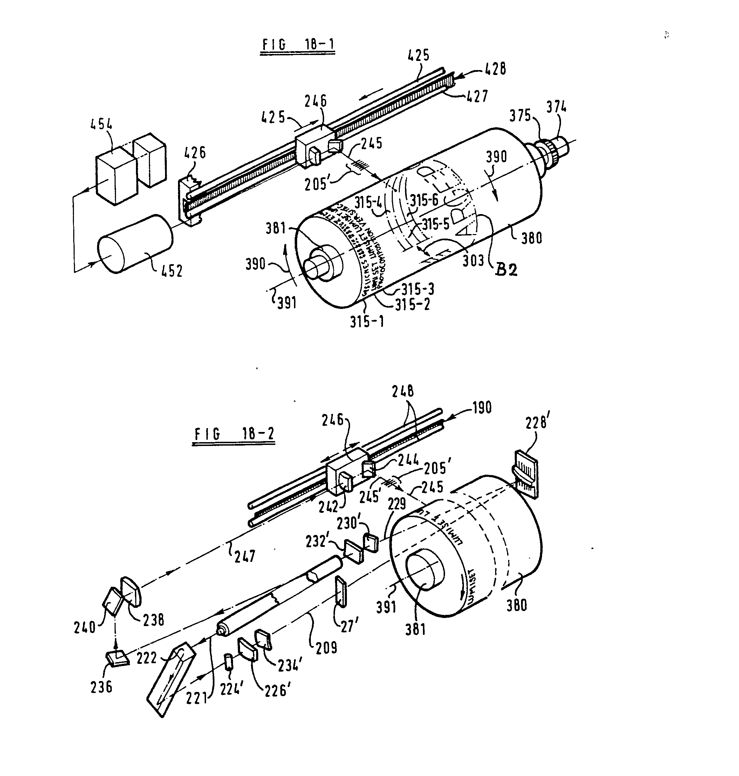

The carriage 246 is provided with an extension 206 having a slot in order to accommodate a grating 190 (part of which is illustrated in Figure 17) attached to the frame of the machine. One side of the slot is provided with illuminating light-emitting means (e.g. light-emitting diodes) 186 and the other side is provided with two photoreceptors 187 and 188. Photoreceptor 188 generates a pulse for each incremental displacement of the carriage (at least one pulse for each motion of the order of 0.025 mm (0.001 inch)), in conjunction with the lower part 197 of the grating 190. Photoreceptor 187 is utilized to create an end of scan or beginning of scan pulse for each sweep. It cooperates with lines 198 of the grating of Figure 17. A "fine" tuning optical micrometer is shown in phantom lines at 237. Its purpose is to correct any deviation too small to be taken care of by mirror 213.

It must be clear that any one of the "fine" correction devices described above for compensation for simultaneous motion of the photosensitive medium and the flying spot scanning can also be used in the case of a "start-stop" motion of the photosensitive medium to correct any small deviation from the desired position of the medium caused by mechanical inaccuracies. Such a device can also be utilized to produce on a stationary film closely spaced adjacent thin lines for the creation of horizontal rules of various thicknesses.

If the arrangement of Figure 15 is not utilized and the light beams emerging from the carriage are directly received by the medium for example as shown in Figure 1, an optical micrometer provided with a relatively thick glass plate can be used as a "coarse" correction means, rather than controlling the orientation of mirror 239 around axis 233 (Figure 1). Because the glass plate 237 of the optical micrometer operates in parallel light, no special optical correction may be necessary. Of course, for "fine" correction the "gate shift" system described above in relation to Figure 14 is preferred.

The purpose of the control circuits shown in block diagram form in Figure 16 is to reduce to zero the unwanted divergence of the traces of the scan lines, in order that they should sweep the film width in a direction perpendicular to the film margins and along straight lines. It is assumed that at least one slice of the page to be composed, at least as wide as the desired brush width, has been stored in raster form in a data storage device or memory unit known in the art and represented by box 330. This device transfers "on demand" to the Photo Unit general controller CPU 332 and its bits store 347 all the necessary information to produce the desired image slices for each successive brush sweep. Some of the information entered into controller CPU 332 by data storage 330 are the length of line (or length of each brush block), the film speed (which depends on the length of line), the carriage speed, the width of each brush expressed as the number of scan lines produced by each sweep, and the line spacing or leading value in the case where individual character lines are produced by each brush sweep.

Before the beginning of the first sweep, the controller CPU 332 stores, in block 342, a value representing the length of line desired, expressed in carriage travel increments. It also informs the carriage motor circuits, block 340, of the selected carriage speed and starts the film feed mechanism, block 344. After the necessary parameters have been selected, a pulse sent over line 331 enters block 334 to initiate the start-a-new-sweep routine. From this moment the carriage motion approximately follows the beginning of the curve of Figure 9 from point zero, under the command of the program stored in block 349.

As soon as the carriage has reached its cruising speed and generates through detector 187 (Figure 15) a "begin-a-new-sweep" signal, the continuous train of pulses produced by photoreceptor 188 and grating 197 are sent to the carriage position register 336 as well as to the pulse accumulator 342 to decrement a previously stored value which represents the total number of carriage pulses contained in the total length of the line or brush block to which the sweep relates.

As the film is continuously moving at a predetermined speed under the control of block 344, the increments of motion of the film feed rollers are entered into the film position register represented by box 337. Units 336 and 337 feed information as to the respective carriage and film instantaneous positions and motion to unit 339. Unit 339 contains a table of the correction required to maintain "ghost" gap 207 (Figure 7) at zero in order to produce straight horizontal blocks on the film. Information necessary to compensate for film motion is sent by unit 339 to unit 346 which contains the necessary circuitry to control either the "coarse" mirror compensator mechanism 348 or the optical micrometer unit 350 or the compensating light gates shift circuit in light-gates control unit 352.

As the carriage moves, the necessary information as to which gate to open (which depends on the carriage location) is sent from storage 347 to the light-gates control unit 352 through gating circuit 351. At the end of a sweep, when the counter 342 reaches zero, a pulse is sent by counter 342 to a delay circuit 338 and an end-of-line circuit 349. The delay circuit is mostly used in the spaced-sweep modes (see Figures 4 and 8) to introduce the desired line spacing or the unit 349 may receive a command from controller CPU 332 through "leading" wire 335 to slow down the carriage return operation in order to allow the film to move the necessary amount to obtain the desired white area between scans. The end-of-sweep routine also causes the return of the compensationg meaans to zero condition.

Although the above description of the control circuitry represented by Figure 16 refers to a film and its driving mechanism, it also applies to an electrophotographic drum or a drum supporting any photosensitive surface including printing plate material. Equally, although the description refers to scanning by means of a moving carriage, it also applies to scanning by means of a tilting mirror or rotating multi-faceted polygonal mirror. In the latter cases, pulses can be generated by the mechanism utilized to tilt the mirror or spin the polygon at a constant speed, and used to instruct the compensating mechanism of the instantaneous position of the scanning bundle of rays.

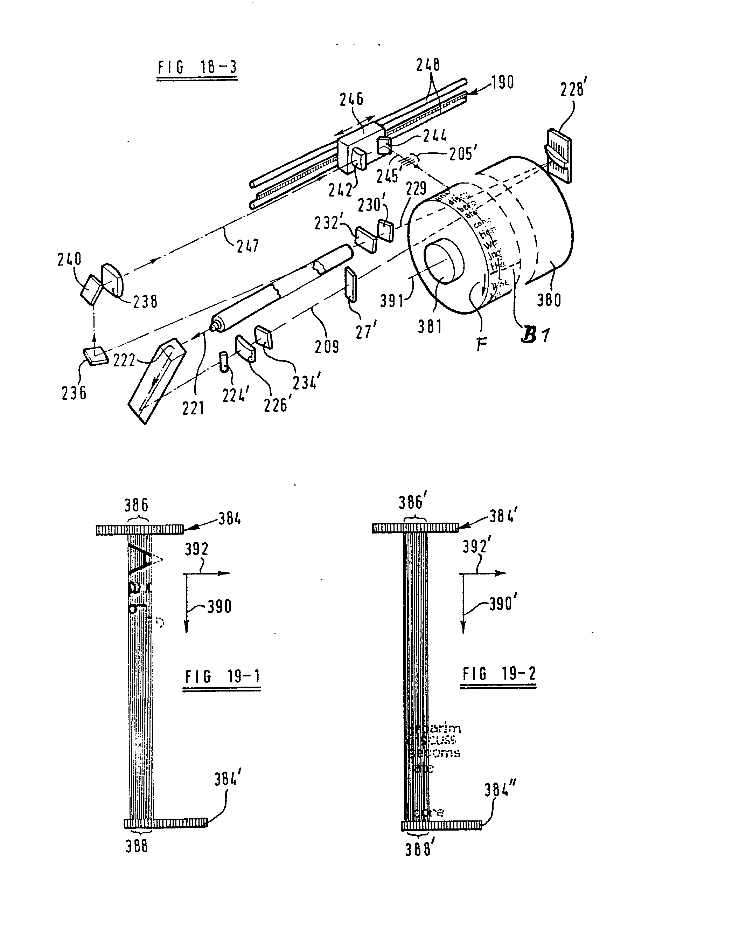

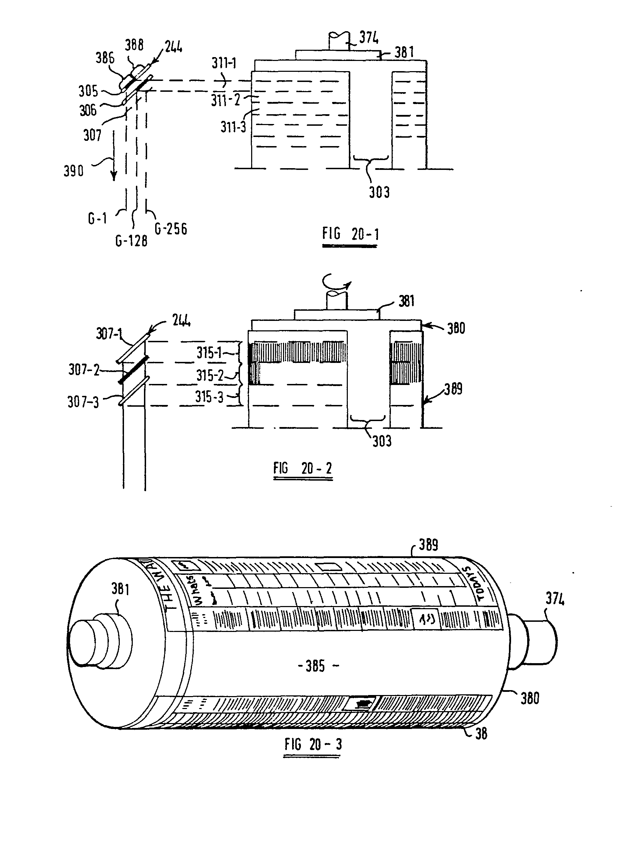

Other embodiments of the invention are illustrated in Figures 18—1 to 20—2. The embodiment of Figure 18—2 will be discussed first.

The optical arrangement of Figure 18—2 is similar to the arrangement of Figure 1 of the said co-pending Application. However, in the present embodiment the displacement of carriage 246 is utilized to space lines of characters or contiguous wide brush sweeps while the rotation of drum 380 assembles elementary rows of light dots in the direction of a line of characters. In other words, the respective functions of the moving carriage and photosensitive surface of the previous description are interchanged. One of the major advantages of the present embodiment is that the translating carriage crosses the useful surface of the photoreceptor *only once per page*.

The arrangement of the optics of Figures 18—2, is such that the divergence of the bundle of rays 247 emerging from collimating lens 238 is very small, which makes it possible to move carriage 246 along a relatively long path, e.g. up to 1.2 m (4 feet) without losing any of the light rays of bundle 247 which, as described in the said co-pending Application, has the shape of a ribbon whose cross section increases as its distance from lens 238 increases. The distance covered by the travel of carriage 246 can, for example, exceed the full *length* of a newspaper page, approximately 585 mm (23 inches). The useful size of the photoreceptor (film or printing plate) located on drum 380 as measured along the periphery of the drum corresponds to the full *width* of a newspaper page, for example 457 mm (108 picas or 18 inches). Thus, the diameter of the drum, taking into account the margins and a certain "dead" zone, could be 180 mm (7 inches).

The drum continuously rotates around its axis 391 during the composition of a full page containing text and graphics. An encoder 381 attached to the drum continuously and constantly informs the control circuits of the drum position, particularly to maintain perfect synchronism between drum rotation and motion of the carriage along its rails. As a non-limitative example, the rotational speed of the drum could be 2 revolutions per second to produce a full newspaper page 457 × 585 mm (18 × 23 inches) in one minute with a vertical and horizontal resolution of 43.3 dots per mm (1,100 dots per inch).

The basic new approach of the present embodiment is generally represented in Figure 18—1. This Figure illustrates that the system presently described and concerning the final image-forming components is not limited to the use of PLZT light gates unit as described above. Box 454 represents any system capable of producing a plurality of light beams, substantially parallel and individually controllable, such as LED arrays and acousto-optic cells, as well as the optical system described above in relation with Figure 18—2.

Unit 452 contains an adjustable image rotator such as a dove prism to adjust the orientation of the images of the light segments, such as 205', projected along line 245 to the photosensitive surface on drum 380. The unit 452 may also contain an adjustable afocal zoom system, capable of changing the resolution of the machine "on demand".

The image-forming optical system is mounted on the carriage 246, which moves parallel to the axis 391 of drum 380 in the direction of the arrow 425 during the composition of a page. The carriage may move at a substantially constant speed or it can be stepped at the end of each sweep as explained later. Drum 380, attached to shaft 374 mounted on bearings (not shown) is continuously rotated by gear 375 engaging another gear mounted on a motor (not shown). An encoder 38 attached to the drum continuously produces drum rotational position codes at the same time as carriage 425, by co-operation with a grating 428, produces carriage position codes.

In the example of Figure 18—1, a number of individual "brush" sweeps are shown at 315—1 to 315—6. To illustration further the operation, groups of words are shown in each sweep or band. For example, sweep 315—1 contains one line of words as well as two lines of smaller characters. In the bands 315—2 and 315—3 a succession of several words are shown.

Large characters requiring several bands (or rotations of the drum) are shown in bands 315—4 to 315—6. The Figure represents the stage at which bands 315—4 and 315—5 have been exposed to the image forming optics, as shown by the position of the carriage 246, so that the following bands 315—6 will receive character images during the next rotation of the drum to complete the word "LARGE PO..." which occupies three bands formed during three consecutive rotations of the drum.

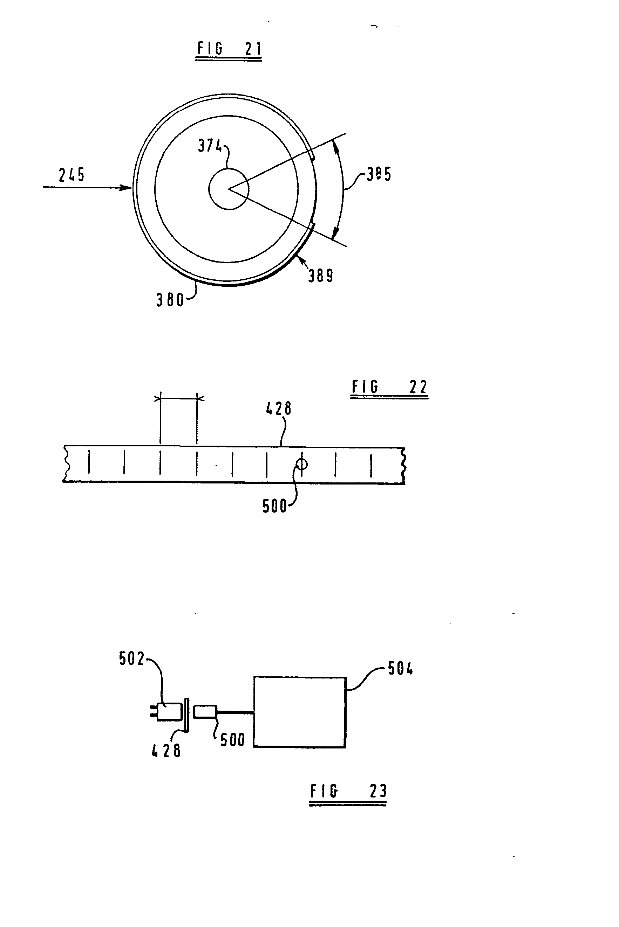

In Figure 21, a photosensitive medium, e.g. film or plate, mounted on the drum, is shown at 389. A space or gap represented by angle 385 in Figure 21 and by area 303 in Figure 18—1 may be utilized to attach the photosensitive medium to the drum and also to provide sufficient time to move carriage 246 in the step-stop mode between successive drum rotations.

Figure 18—2 illustrates the incorporation of the principles of Figure 18—1 in a photocomposer otherwise similar to that described with reference to Figure 1. Figure 18—2 differs from Figure 1 in that the ribbon of light beams entering travelling lens 242 is rotated by ninety degrees so that its width lies in a horizontal plane rather than in a vertical plane, as defined above. This change can be obtained by different means. In the arrangement shown in Figure 18—2, the elongated ribbon-like light bundle is rotated through ninety degrees by also rotating through ninety degrees, as shown, the cylindrical lenses 224', 226', 234' and 232'. The crossed polarizers 27' and 230' may also be rotated by ninety degrees. These and other components of Figure 18—2 that, in comparison with Figure 1, have been rotated by ninety degrees around axes 209 and 229 respectively are identified by the reference numbers of their counterparts in Figure 1, but primed to indicate their rotation. Thus modulator assembly 228', as compared to modulator 228 of Figure 1, has been rotated by ninety degrees as shown in Figure 18—2. Through these changes, the orientation of the emerging columnar modulated light rays is as schematically represented at 205' rather than in the orthogonal position shown at 205 in Figure 1. Thus the image of the vertical column of elementary light control areas of the PLTZ wafer has now become a horizontal row.

The operation of the section of the machine of Figure 18—2 represented by components having counterparts in Figure 18—1 is as described for Figure 18—1. As shown in Figure 18—2, a sweep or band of signs or characters is produced for each revolution of drum 380. These sweeps or bands must be parallel to one another and perpendicular to the axis of rotation of the drum and must be perfectly contiguous in order to avoid objectionable gaps or overlapping between consecutive bands. This is obtained by perfect synchronisation between the rotation of the drum and motion of the carriage if the latter is in continuous motion, or by accurately stepping the carriage during the passage of blank area 303 (Figure 18—1) or angle 385 (Figure 21). The position detector of the carriage is sufficiently accurate to transfer to the controlling circuit any slight deviation from its desired position caused, for example, by vibrations in the mode of operation in which the carriage is stepped. In this case, some gates of the light gates array of the modulator 228' are kept "in reserve" to be utilized to correct any temporary error in the position of the carriage. This correction is obtained by changing the gates in use so as to move the horizontal image of the row of gates in use to the right or to the left by increments of 20 microns. Figure 20—2 illustrates this mode of operation.

A high degree of accuracy in determining the position of the carriage for this purpose can be obtained by the arrangement shown in Figures 22 and 23. These Figures show the use of a differential photocell 500 and a light source 52 operating with the grating strip 428 and accurately detecting the position of the carriage and feeding this information to the gate selection electronics 504.

In Figure 20—2 three bands swept during a rotation of drum 380 are shown at 315—1 to 315—3, and the "clear" zone at 303. At the beginning of a page, the carriage mirror 244 is at position 307—1 and the first projection sweep occurs as zone 303 has crossed the projection position (illustrated by line 245). At the end of the first active turn of the drum during which character images are projected, which occurs when zone 303 re-enters the projection position, the carriage is stepped one band-width so that its mirror moves to position 307—2, ready to start imaging the second sweep, as soon as zone 303 has cleared the projection position. The gradual filling of the second band by images (represented by a series of vertical lines) proceeds as shown, while the mirror remains stationary at 307—2. Then, while zone 303 again crosses the projection position, the carriage mirror moves to position 307—3, ready for the third band (or sweep) and so on.

In the other operating mode, in which the carriage is in continuous motion during the composition of a line, the consecutive lines or sweeps are maintained parallel to each other and perpendicular to the drum axis by the operation of the "gate-shift" compensating system described with reference to Figure 14. For example, the schematic representation of the formation of successive lines in this operating mode is shown in Figures 19—1 and 20—1. At the beginning of the composition of a page, carriage mirror 244 is located at position 305 (Figure 20—1). The carriage mirror continuously moves in the direction shown by arrow 390 while the drum is spinning. At the very beginning of the line, gates in use by the modulator 228' produce images that are projected by area 386 of the mirror. As the mirror moves "down", in the direction of arrow 390, the gates in use are gradually shifted to produce images that move toward position 388 of the mirror so that, at the end of the first sweep, mirror area 386 represents inactive gates while mirror area 388 corresponds with the gates in use for the projection of the last images of this first sweep.

After zone 303 has crossed the projection position the projection of the second line will begin. At first, those gates of the columnar gates array used at the beginning of the first line will again be selected for use to produce images that are projected by the area 386 of the mirror, now at position 306. Again, as the drum rotates and the carriage moves, the gates in use are gradually shifted to compensate for the simultaneous displacements of the moving components so that, at the end of the second line, it will be mirror area 388 that will be active. This cyclical shifting of the gates in use, in synchronism with rotation of the drum and movement of the mirror, will continue until a complete page or pre-determined part of a page has been projected, at which time the carriage unit 246 (Figure 18—2) is returned home, the photosensitive medium is changed or the surface of the (selenium) drum is otherwise prepared for a new page. The different lines or brush sweeps are shown at 311—1, 311—2 and 311—3 in Figure 20—1.

Corrections can also be achieved by the software embodiment described in relation to Figure 8A.

Figure 19—1 further illustrates the operation of this embodiment. The image of the contiguous light gates of the light gates array is shown at 384 at the beginning of a sweep and at 384' at the end of a sweep. At the beginning of a sweep, the group of light gates in use is shown at 386, the group 388 being in use at the end of a sweep. The row 384 may comprise as many as 256 gates, but only a group of them is utilized during any one part of one sweep; the other gates, such as those located on the left hand side of group 386, as seen in Figure 19—1, are compensating gates gradually brought into use as the drum rotates. The gates located on the right side of group 386 could be used in a reverse, backwards operation. Arrow 392 represents the direction of the carriage displacement and arrow 390 the direction of rotation of the drum. Letters A, a and b illustrate the gradual formation of images.

As clearly shown in Figure 20—1, the alternative in which the optical carriage is continuously moving necessitates the use of one of the described compensating systems, but the method just described, although it necessitates use, at any one time, of less than the total number of available light gates or equivalent light sources, and consequent restriction of the available brush width, ensures a smoother operation.

A particularly advantageous embodiment is shown in Figure 20—3 which shows a plate 389 for printing a full newspaper page, produced with only one displacement of the carriage 246 in a direction parallel to the axis of the drum 380.

In the embodiment of Figure 20—3, by way of example, the diameter of the drum 380 is 180 mm (7 inches), and its length is approximately 585 mm (23 inches). The newspaper page (e.g., one page of the "Wall Street Journal") is approximately 380 mm (15 inches) wide (including margins) by 580 mm (22½ inches) long. The gap 385 between lateral edges is approximately 180 mm (7 inches). The weight of the carriage 246 is only approximately 75 grams (2½ ounces) and thus can be started and stopped quickly. The gates array has 256 gates, and a resolution of approximately 47.2 lines per mm (1,200 lines per inch) is selected.

The carriage 246 is driven by a servo-motor with a drive mechanism of the type described in the said co-pending Application in a stop-start mode to provide accurate locations for successive bands of characters and graphic matter on the drum. The carriage 246 requires about 30 to 35 milliseconds (including settling time) to move from one band-forming position to the next.

The drum 380 is rotated continuously at a speed of 3.5 revolutions per second (210 R.P.M.); at this speed, the gap 385 provides around 90 milliseconds in which the carriage can change position, thus providing more than ample time for the shift.

This arrangement provides a capability of composing around 600 newspaper lines of 8-point, 11 pica text per minute; or 300 characters per second. A full newspaper page can be composed in less than one minute.

The optical system is capable of handling such extremely long distances as the 585 mm (23 inches) length of the drum in part because the carriage travels in converging collimated rays which are produced in the manner described in the said co-pending Application. The optics are dimensioned so that the light rays converge to a point about half-way between the ends of the drum. This minimizes vignetting and other problems which previously made such great distances of travel impractical or impossible.

The light weight of the carriage 246 helps to enable the composer to operate at such a high speed. Moreover, the high resolution provided by the machine makes it possible to reproduce photographs and other graphic matter using the same strokes as those used to compose the characters.

In another embodiment, the drum diameter is increased to 356 mm (14 inches), and the drum speed is lowered to 1.75 R.P.S. (105 R.P.M.). This makes it possible to compose a whole double newspaper page on one pass of the carriage 246. That double page can be folded to form two pages of a newspaper. When printed on both sides, it forms four newspaper pages.

The printing plate 389 attached to the drum 380 advantageously can be a zinc-oxide coated plate, or can be photographic film or paper to be used in making a metal printing plate.

It is apparent from the foregoing that the continuously-rotating drum form of the invention has several advantages not previously mentioned. By using the light-weight carriage 246 for band-spacing, the need for repeatedly starting and stopping the more massive film or drum is avoided, thus enabling stop-start motion without any significant diminution of composing speed. Moreover, this can be accomplished with the use of relatively low drum speeds, thus avoiding highspeed balancing and other problems. In fact, within the limitations of the electronic circuitry, the drum speeds mentioned above can be increased significantly, thus even further increasing the composing speed.

In all embodiments of the invention, rapid changing of fonts is possible. For example, four or more fonts may be stored at one time in RAM, and twenty or more on a floppy disc. Two hundred or more can be stored on a 10 Megabyte Winchester disc. Each font includes up to 256 characters and/or signs.

In the alternative arrangement shown in Figures 18—3 and 19—2, the character images produced by the parallel horizontal "ribbon" of light rays are rotated ninety degrees by the character-forming electronics as compared to the example of Figure 18—1. The length of drum 380 represents, in this embodiment, the *width* of a page and the periphery of the drum the *length* of the page, plus the "dead zone" 385 of Figure 20. Each circular band produced by the wide light brush during one drum revolution contains characters belonging to different lines of text. The continuous rotation of the drum is used to space characters according to their height plus interline spacing if any. But, as in the previous embodiment of Figure 18—1, the carriage traverses the length of the drum only once per page. As described before, the motion of the carriage can be either continuous or step by step, each step being generally equal, to the width of a band or a wide brush. This alternative arrangement makes it possible to decrease the length of the drum (at the expense of its diameter) and consequently the total travel of the carriage, but at the expense of more electronic storage and manipulation.

## Claims

1. A photocomposing method for recording information on a photosensitive surface (250, 380), comprising forming a light brush (217) of individually modulatable parallel light beams (205) and continually moving said brush to sweep said surface to trace parallel bands thereon while said surface is in continuous motion in a direction perpendicular to the brush motion, and modulating said light beams to generate images (210) in said bands, characterised by compensating for the respective motions of the photosensitive surface and the light brush to position images correctly on the photosensitive surface.

2. A method according to claim 1, comprising detecting the instantaneous positions of said light brush and said photosensitive surface and producing corresponding position-indicating signals, and utilizing said signals to adjust the positions of images formed on the surface by the brush to correct for the skew of the images resulting from the simultaneous motions of the brush and surface.

3. A method according to claim 1 or 2, wherein said light brush is formed by illuminating a light shutter unit (228) comprising a column of coterminous, individually-controllable gates (200, 203), and said compensating for the respective motions of the light brush and photosensitive surface comprises changing the selection of said gates during the tracing of a said band on said surface.

4. A method according to claim 3, comprising storing gate selection change instructions in a computer memory (330, 347) and retrieving said instructions during the tracing of a said band.

5. A method according to claim 3 or 4, wherein said gate selection changes are effective to maintain the scanlines traced by the brush perpendicular to an edge of the photosensitive surface.

6. A method according to any preceding claim, in which said photosensitive surface is provided on a continuously rotating drum (380) and said light brush (217) traces circumferential bands on the drum, the light brush being continuously displaced in the direction of the length of the drum to position traced bands relatively to one another.

7. A method according to any preceding claim, wherein said traced bands are contiguous and of constant width.

8. A method according to any preceding claim, wherein said images (210) comprises characters disposed with their base-lines perpendicular to the direction of motion of the photosensitive surface whereby the motion thereof effects line spacing.

9. A method according to any one of claims 1 to 7, wherein said images (210) comprise characters disposed with their base-lines aligned with the direction of motion of the photosensitive surface whereby the motion thereof spaces the characters from one another.

10. A method according to claim 6 or any claim dependent thereon, wherein said photosensitive surface has dimensions corresponding with a standard newspaper page to permit composition of a complete page for one traverse of such surface by the light brush.

11. A photocomposing machine comprising means (380) for supporting a photosensitive surface (250, 389) and for moving such surface continuously in one direction; means for forming a light brush (217) of individually modulatable parallel light beams (205); means for continually moving said light brush in a direction perpendicular to said one direction to cause the light brush to sweep said surface to trace parallel bands thereon; and means for modulating said individual light beams to generate images in said bands, characterised by means compensating for the respective motions of the photosensitive surface and the light brush to position images correctly on said photosensitive surface.

12. A machine according to claim 11, further characterised by means (190) for detecting and signalling the instantaneous position of the light brush (217); means (337) for detecting and signalling the instantaneous position of the photosensitive surface (250, 389); and means (339, 340) utilizing the signalled position information to actuate said compensating means to correct for the skew of the said images resulting from the simultaneous motions of the brush (217) and the photosensitive surface (250, 289).

13. A machine according to claim 11 or 12, in which said means for forming the light brush (217) comprise a light shutter unit (228) having a column of coterminous, individually-controllable gates (200, 203), and said compensating means comprises means (352) for changing the selection of the gates during the tracing of a said band.

14. A machine according to claim 13, including memory means (330, 347) for storing gate selection change instructions and providing for retrievel of said instructions during the tracing of a said band.

15. A machine according to claim 13 or 14, in which said selection changing means (352) comprise means for shifting the address in memory from which an instruction for controlling an individual gate (200, 203) is retrieved.

16. A machine according to claim 13 or 14, in which said selection changing means (352) comprises means enabling gates (200, 203) within a zone (298) of said column, and means for shifting said zone in said column.

17. A machine according to any one of claims 11 to 16, wherein said support comprises a drum (380) and means for continuously rotating said drum about its axis, the machine further comprising means (246) for displacing said light brush (217) in the direction of the length of the drum.

12

18. A machine according to any one of claims 11 to 17, comprising coarse and fine compensating means individually actuable for correct image position errors.

**Patentansprüche**

1. Verfahren zum photografischen Setzen von Aufnahmeinformationen auf einer lichtempfindlichen Oberfläche (250, 380), das umfaßt: Ausbilden eines Lichtbündels (217) einzeln modulierbarer paralleler Lichtstrahlen (205) und kontinuierliches Bewegen des Bündels, um die Oberfläche zu überstreichen, um darauf parallele Bänder zu spuren, während die Oberfläche sich kontinuierlich in einer Richtung senkrecht zu der Bündelbewegung bewegt, und Modulieren der Lichtstrahlen, um Bilder (210) auf den Bändern auszubilden, gekennzeichnet durch Kompensieren der jeweiligen Bewegungen der lichtempfindlichen Oberfläche und des Lichtbündels, um Bilder korrekt auf der lichtempfindlichen Oberfläche zu positionieren.

2. Verfahren nach Anspruch 1, das umfaßt: Erfassen der Momentanpositionen des Lichtbündels und der lichtempfindlichen Oberfläche und Erzeugen entsprechender Positionsanzeigesignale und Verwenden der Signale, um die Positionen von Bildern einzustellen, welche mittels des Bündels auf der Oberfläche ausgebildet werden, um die Verzerrungen der Bilder zu korrigieren, die von der gleichzeitigen Bewegung des Bündels und der Oberfläche herrühren.

3. Verfahren nach Anspruch 1 oder 2, wobei das Lichtbündel durch Beleuchten einer Lichtblendeneinheit (228) ausgebildet ist, die eine Reihe miteinander fluchtender, individuell steuerbarer Tore (200, 203) umfaßt, und die Kompensation der jeweiligen Bewegungen des Lichtbündels und der lichtempfindlichen Oberfläche das Verändern der Auswahl der Tore während des Spurens des Bandes auf der Oberfläche umfaßt.

4. Verfahren nach Anspruch 3, umfassend das Speichern von Befehlen zur Veränderung von Torauswahlen in einem Computerspeicher (330, 347) und Auslesen der Befehle während des Spurens auf dem Band.

5. Verfahren nach Anspruch 3 oder 4, wobei die Veränderungen der Torauswahl die mittels des Bündels gespurten Abtastlinien senkrecht zu einer Kante der lichtempfindlichen Oberfläche halten.

6. Verfahren nach einem der vorangehenden Ansprüche, wobei die lichtempfindliche Oberfläche auf einer sich kontinuierlich drehenden Trommel (380) ausgebildet ist und das Lichtbündel (217) in Umfangsrichtung Bänder auf der Trommel spurt, wobei das Lichtbündel kontinuierlich in der Längsrichtung der Trommel bewegt wird, um die gespurten Bänder relativ zueinander auszurichten.

7. Verfahren nach einem der vorangehenden Ansprüche, wobei die gespurten Bänder aneinander angrenzen und konstante Breite haben.

8. Verfahren nach einem der vorangehenden Ansprüche, wobei die Bilder (210) Zeichen umfassen, die mit ihrer Grundlinie senkrecht zu der Bewegungsrichtung der lichtempfindlichen Oberfläche angeordnet sind, wodurch die Bewegung derselben des Beabstanden von Zeilen bewirkt.

9. Verfahren nach einem der Ansprüche 1 bis 7, wobei die Bilder (210) Zeichen umfassen, die mit ihren Grundlinien mit der Bewegungsrichtung der lichtempfindlichen Oberfläche fluchten, wodurch die Bewegung derselben die Zeichen voneinander beabstandet.

10. Verfahren nach Anspruch 6 oder einem davon abhängigen Anspruch, wobei die lichtempfindliche Oberfläche Abmessungen aufweist, die mit einer Standardzeitungsseite übereinstimmen, um die Zusammensetzung einer kompletten Seite für eine Traverse einer solchen Oberfläche durch das Lichtbündel zu erlauben.

11. Photosatzmaschine, die umfaßt: Mittel (380) zum Halten einer lichtempfindlichen Oberfläche (250, 389) und zum Bewegen solch einer Oberfläche kontinuierlich in einer Richtung; Mittel zum Ausbilden eines Lichtbündels (217) individuell modulierbarer paralleler Lichtstrahlen (205); Mittel zum kontinuierlichen Bewegen des Lichtbündels in einer Richtung senkrecht zu der einen Richtung, um das Lichtbündel die Oberfläche überstreichen zu lassen, um parallel Bänder darauf zu spuren; und Mittel zum Modulieren der individuellen Lichtstrahlen, um Bilder in den Bändern auzubilden, gekennzeichnet durch Mittel, die die jeweiligen Bewegungen der lichtempfindlichen Oberfläche und des Lichtbündels kompensieren, um die Bilder korrekt auf der lichtempfindlichen Oberfläche zu positionieren.

12. Maschine nach Anspruch 11, ferner gekennzeichnet durch Mittel (190) zum Erfassen und Signalisieren der momentanen Position des Lichtbündels (217); Mittel (337) zum Erfassen und Signalisieren der momentanen Position der lichtempfindlichen Oberfläche (250, 389); und Mittel (339, 340), welche die signalisierten Positionsinformationen verwenden, um die Kompensationsmittel zu aktivieren, um die Verzerrung der Bilder, die von der gleichzeitigen Bewegung des Bündels (217) und der lichtempfindlichen Oberfläche (250, 389) herrührt, zu korrigieren.

13. Maschine nach Anspruch 11 oder 12, wobei die Mittel zum Ausbilden des Lichtbündels (217) eine Lichtblendeneinheit (228) mit einer Reihe von miteinander fluchtenden, individuell steuerbaren Toren (200, 203) umfaßt, und die Kompensationsmittel Mittel (352) zum Verändern der Auswahl der Tore während des Spurens des Bandes umfassen.

14. Maschine nach Anspruch 13, die Speichermittel (330, 347) zum Speichern von Befehlen zum Verändern der Torauswahl und zum Auslesen der Befehle während des Spurens des Bandes umfaßt.

15. Maschine nach Anspruch 13 oder 14, wobei die Auswahlveränderungsmittel (352) Mittel zum Verschieben der Adresse in dem Speicher umfassen, von der ein Befehl zum Steuern eines individuellen Tores (200, 203) gelesen wird.

16. Maschine nach Anspruch 13 oder 14, wobei die Auswahlveränderungsmittel (352) Mittel zum Freigeben von Toren (200, 203) innerhalb einer Zone (298) der Reihe und Mittel zum Verschieben der Zone in der Reihe umfassen.

17. Maschine nach einem der Ansprüche 11 bis 16, wobei die Halterung eine Trommel (380) und Mittel zum kontinuierlichen Drehen der Trommel um ihre Achse umfassen, wobei die Maschine ferner Mittel (246) zum Bewegen des Lichtbündels (217) in Längsrichtung der Trommel umfaßt.

18. Maschine nach einem der Ansprüche 11 bis 17, umfassend Grob- und Feinkompensiermittel, die individuell ansteuerbar sind, um Bildpositionsfehler zu korrigieren.

**Revendications**

1. Procédé de photocomposition destiné à enregistrer des informations sur une surface photosensible (250, 380), comprenant les étapes consistant à former un pinceau lumineux (217) de faisceaux lumineux parallèles (205) modulables individuellement et à déplacer en continu ce pinceau pour balayer la surface et y tracer des bandes parallèles tandis que la surface est en mouvement continu dans une direction perpendiculaire au mouvement du pinceau, et à moduler les faisceaux lumineux pour produire des images (210) dans ces bandes, caractérisé par la compensation des mouvements respectifs de la surface photosensible et du pinceau lumineux pour correctement positionner les images sur la surface photosensible.

2. Procédé selon la revendication 1, comprenant l'opération consistant à détecter les positions instantanées du pinceau lumineux et de la surface photosensible, à produire des signaux correspondants indicatifs de position, et à utiliser ces signaux pour ajuster la position des images formées sur la surface par le pinceau pour corriger l'obliquité des images résultant des mouvements simultanés du pinceau et de la surface.

3. Procédé selon la revendication 1 ou 2, dans lequel le pinceau lumineux est formé en éclairant un obturateur de lumière (228) comprenant une colonne de portes coterminales (200, 203) pouvant être commandées individuellement et la compensation des mouvements respectifs du pinceau lumineux et de la surface photosensible comprenant les étapes consistant à modifier la sélection des portes pendant le traçage d'une bande sur la surface.

4. Procédé selon la revendication 3, comprenant l'étape consistant à mémoriser les instructions de modification de sélection de portes dans une mémoire d'ordinateur (330, 347) et à récupérer ces instructions pendant le traçage d'une bande.

5. Procédé selon la revendication 3 ou 4, dans lequel les modifications de sélection de portes sont aptes à maintenir les lignes de balayage tracées par le pinceau perpendiculaires à un bord de la surface photosensible.

6. Procédé selon l'une quelconque des revendications précédentes, dans lequel la surface photosensible est prévue sur un tambour rotatif en continu (380) et le pinceau lumineux (217) trace des bandes circonférentielles sur le tambour, le pinceau lumineux étant déplacé en continu dans le sens de la longueur du tambour pour positionner les bandes tracées l'une par rapport à l'autre.

7. Procédé selon l'une quelconque des revendications précédentes, dans lequel les bandes tracées sont contiguës et de largeur constante.

8. Procédé selon l'une quelconque des revendications précédentes, dans lequel les images (210) comprennent des caractères disposés avec leurs lignes de base perpendiculaires à la direction de mouvement de la surface photosensible, ce qui permet à son mouvement d'effectuer l'espacement de lignes.

9. Procédé selon l'une quelconque des revendications 1 à 7, dans lequel les images (210) comprennent des caractères disposés avec leurs lignes de base alignées sur le sens de marche de la surface photosensible, son mouvement espaçant les caractères l'un par rapport à l'autre.

10. Procédé selon la revendication 6 ou toute revendication dépendante de celle-ci, dans lequel la surface photosensible présente des dimensions correspondant à une page de journal standard pour permettre la composition d'une page complète pour un balayage de cette surface par le pinceau lumineux.

11. Machine de photocomposition comprenant des moyens (380) destinés à supporter une surface photosensible (250, 389) et à déplacer cette surface en continu dans une direction; des moyens pour former un pinceau lumineux (217) de faisceaux lumineux parallèles modulables (205); des moyens pour déplacer en continu ce pinceau lumineux dans une direction perpendiculaire à cette direction pour faire en sorte que le pinceau lumineux balaie cette surface pour y tracer des bandes parallèles; et des moyens destinés à moduler les faisceaux lumineux individuels pour produire des images dans ces bandes, machine caractérisée par des moyens compensant les mouvements respectifs de la surface photosensible et du pinceau lumineux pour correctement positionner les images sur la surface photosensible.

12. Machine selon la revendication 11, caractérisé de plus par des moyens (190) destinées à détecter et à signaler la position instantanée du pinceau lumineux (217); des moyens (337) destinés à détecter et à signaler la position instantanée de la surface photosensible (250, 389); et des moyens (389, 340) utilisant les informations de position signalées pour actionner les moyens de compensation afin de corriger l'obliquité des images résultant des mouvements simultanés du pinceau (217) et de la surface photosensible (250, 289).

13. Machine selon la revendication 11 ou 12, dans laquelle les moyens destinés à former le pinceau lumineux (217) comprennent un obturateur de lumière (228) comportant une colonne de portes coterminales (200, 203) pouvant être commandées individuellement et les moyens de compensation comprennent des moyens (352) pour modifier la sélection des portes pendant le traçage d'une bande.

14. Machine selon la revendication 13, comprenant une mémoire (330, 347) destinée à stocker les instructions de modification de sélecton de portes et à permettre la récupération de ces instructions pendant le traçage d'une bande.

15. Machine selon la revendication 13 ou 14, dans laquelle les moyens de modification de sélection (352) comprennent des moyens de décalage d'adresse dans la mémoire à partir de laquelle on récupère une instruction pour commander une porte individuelle (200, 203).

16. Machine selon la revendication 13 ou 14, dans laquelle les moyens de modification de sélection (352) comprennent des moyens validant les portes (200, 203) à l'intérieur d'une zone (288) de la colonne et des moyens pour décaler la zone dans la colonne.

17. Machine selon l'une quelconque des revendications 11 à 16, dans laquelle le support comprent un tambour (380) et des moyens pour faire tourner en continu le tambour autour de son axe, la machine comprenant de plus des moyens (246) pour déplacer le pinceau lumineux (217) dans le sens de la longueur du tambour.

18. Machine selon l'une quelconque des revendications 11 à 17, comprenant des moyens de compensation grossière et précise pouvant être actionnés individuellement pour corriger les erreurs de position d'image.

FIG. 1

FIG 2

FIG 3

FIG 4

FIG 5

FIG 6

2

FIG 7

FIG 8

The quick brown fox jumped over the lazy dog

FIG 8 A

FIG 9

FIG 10

FIG 11

FIG 12

EP 0 192 486 B1

FIG 13

FIG 14

FIG 15

| - 378 - | | - 330 - |
|---|---|---|

| - 332 - | - 347 - |
|---|---|

341

335

331

345

| -338- | -340- | -342- |

| -349- | -350- | -351- |

| -334- | -336- | -339- |

343

335

| -337- |

| -348- | -352- |

| -344- | -346- |

FIG 16

190

198  197

FIG 17

7

EP 0 192 486 B1

FIG 18-1

FIG 18-2

8

FIG 18-3

FIG 19-1

FIG 19-2

9

FIG 20-1

FIG 20-2

FIG 20-3

FIG 21

245 →

374

385

389

380

FIG 22

428

500

502

504

428

500

FIG 23